Europäisches Patentamt

European Patent Office

Office européen des brevets

(11) Publication number : **0 473 310 A2**

(12) **EUROPEAN PATENT APPLICATION**

(21) Application number : 91307315.1

(22) Date of filing : 08.08.91

(51) Int. Cl.⁵ : **H04N 5/262**

(30) Priority : 31.08.90 US 576234

(43) Date of publication of application :
04.03.92 Bulletin 92/10

(84) Designated Contracting States :
**DE FR GB SE**

(71) Applicant : **Hughes Aircraft Company**
**7200 Hughes Terrace P.O. Box 45066**
**Los Angeles, California 90045-0066 (US)**

(72) Inventor : **Plunk, Gerald W.**
**1522 Deerfoot Drive**
**Diamond Bar, California 91765 (US)**

(74) Representative : **Colgan, Stephen James et al**
**CARPMAELS & RANSFORD 43 Bloomsbury**
**Square**
**London WC1A 2RA (GB)**

(54) Oblique photographic data base generation.

(57) Methods of generating a digital photographic database wherein oblique photographs are taken at an angle which approximates a desired flight path. The photographs may be taken at a single eye point using multiple cameras, each camera having increasing magnification, or may be taken with one camera at a plurality of different ranges along the flight path. Each photograph represents a resolution viewplane from which a computer synthesized image is generated to provide alternative eye point perspectives. The methods of the present invention generate a corridor based multiple resolution photographic database wherein the amount of digital computer processing time is reduced by a factor of greater than one hundred as compared to conventional downlooking imagery conversion techniques that render oblique views. The methods of the present invention reduce the amount of digital image storage and provides a more realistic perspective view than rendering downlooking imagery to oblique views.

FIG. 2.

## BACKGROUND

The present invention relates to digital image processing and, more particularly, to a method for generating a digital image database useful in a simulated flight trainer.

Heretofore, a system known as Computer Generated Imagery (CGI) has been utilized for generating digital images used in simulated flight trainers. In the CGI system, a computer generates polygons that are joined together in a mosaic to form an artificially constructed image that simulates an actual scene depicting a target or a flight path to a target. One disadvantage of CGI is its lack of realism. When using CGI, an object can be accurately positioned, correctly illuminated and displayed in correct perspective, but the object itself cannot be realistically represented. The objects appear overly artificial or cartoonlike.

Another imaging system is referred to as Computer Synthesized Imagery (CSI). The CSI technology also generates images from a database, but it employs real images such as photographs in the scenes. Thousands of individual photographs are stored on video disks and accessed as required. Thus, whereas CGI uses a computer to generate artificial imagery from a purely mathematical database, CSI uses a computer to insert objects into a scene based on stored images of real-world objects. However, in CSI the control over scene construction is restricted. One disadvantage of CSI is that its scenes are limited to the viewpoint of the camera. That is, the operator seated in a simulator or trainer cannot dynamically navigate a scene unless a series of through-the-scene photographs is used. For any reasonably sized terrain flight corridor, the number of through-the-scene photographs needed is prohibitive.

A third imaging system called Computer Generated Synthesized Imagery (CGSI) is described in U.S. Patent No. 4,835,532 granted to Karl M. Fant. The objective in the CGSI system is to combine the best features of CGI and CSI, and it involves the use of real-world images in the database. However, it entails computer synthesis of a scene piece-by-piece and object-by-object. Briefly, a scene is constructed by placing objects on a specified surface or background. The surface elevations and object locations are laid out on a uniform grid. The objects used in the scene are tailored for perspective, location and transformation including size, position, rotation, warp and intensity. The scene is constructed by beginning with the objects most remote from the observation point, and placing objects until the nearest objects have been placed. However, even though stored real-world images are used, CGSI cannot realistically present an image of a given scene by synthesizing it piece-by-piece. It lacks the proper photographic texture, proper viewing angle amid the proper incremental increase of resolution that is seen in a real-time fly-through, mile-after-mile, along a funnel-like flight path corridor to a target.

An effort was made to develop a method of generating a corridor-based, multiple resolution photographic database that did not exhibit the disadvantages of the CGI, CSI and CGSI systems. Aerial photographs were made along a flight corridor to a target. These photographs were all downlooking and the result was a plan view of the terrain along the corridor as seen from the air. The photographs were digitized and fitted together by mosaicking. Then they were radiommetrically balanced, orthorectified and aligned to digital terrain elevation data. These techniques are all well known in the field of photogrammetry. Finally, an oblique perspective was made. In other words, the downlooking photographs showing a plan view were warped to generate an oblique photographic database. A great amount of computational time is required to make ray traces of the digital data in order to create the perspective view, and many gigabytes of on-line memory are required. As a result, thiis effort was never completed. Furthermore, the resultant oblique images were not very realistic because they were made by converting downlooking imagery to oblique views. For example, a downlooking image of a building is a rectangular roof. If the downlooking image is warped to give an oblique perspective view, a warped rectangular roof is obtained, not a perspective view of a building.

It should be understood that generation of a photographic database is a key cost and schedule item of any photographic based visual system project. This initial effort cost many millions of dollars, and at the end of 18 months it was estimated that at least another five years and many more millions of dollars would be required to finish the project. This was because of the ray tracing required, the man-hours required, the amount of digital processing time required, and the amount of digital image storage required. A later estimate indicated that 24 years would be required to finish the project.

Accordingly, there has been a need for an improved method for generation of an oblique photographic database that approximates a flight path. It is an objective of the present invention to provide a method for generation of an oblique photographic database that is more realistic, that provides successively increasing resolution as a target is approached, and that is simpler and easier to implement.

## SUMMARY OF THE INVENTION

In order to meet the above objective, the present invention comprises methods of generating a digital photographic database wherein oblique photographs are taken at an angle which approximates a desired light path. The photographs may be taken at a single eye point using multiple cameras, each camera having increasing magnification, or may be taken with one camera at a plurality of different ranges along the flight path. Each photograph represents a resolution viewplane from which a computer synthesized image is generated to provide alternative eye point perspectives.

In one specific method, the viewplanes are generated in accordance with the following steps. First, a plurality of cameras is provided, each camera having a different focal length. The plurality of cameras are mounted on a platform that is aimable at a target of interest. The plurality of cameras are thien synchronized. The image scene is photographed from the platform. The film from each camera is then digitized. The multiple digital images are merged together by digitally blending the highest resolution digitized image into the next highest resolution digitized image, and then blending the blended image into the next highest resolution image, and so on, for each respective digitized image. The digitized images are thien processed into multiple resolution viewplanes using interpolation techniques, each respective viewplane having correspondingly increasing resolution that is a function of range to the target.

In a second specific method, the viewplanes are generated in accordance with the following steps. A single camera is arranged to be aimable at the target. The image scene is photographed from different camera locations or eye points along a predetermined line of flight towards the target. The film is then digitized. The digitized images are then digitally warped to align the viewpoint along a single straight line approach to the target. The multiple digital images are merged together by digitally blending the highest resolution digitized image into the next highest resolution digitized image, and then blending the blended image into the next highest resolution image, and so on, for each respective digitized image. Finally the digitized images are processed into a plurality of viewplanes, each respective viewplane having correspondingly increasing resolution that is a function of range to the target.

The methods of the present invention generate a corridor based multiple resolution photographic database wherein the amount of digital computer processing time is reduced by a factor of greater than one hundred as compared to conventional downlooking imagery conversion techniques that render oblique views. The methods of the present invention reduce the amount of digital image storage and provides a more realistic perspective view than rendering downlooking imagery to oblique views.

## BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:

FIG. 1 is a perspective view of a multiple camera platform used for taking multiple photographis at a single eye point;

FIG. 2 is a perspective view illustrating the taking of multiple photographs at a single eye point;

FIG. 3 is a perspective view of view planes along a corridor to a target;

FIG. 4 is a perspective view illustrating another method of generating an oblique photographic digital database by taking pictures with one camera at multiple eye points; and

FIG. 5 is a plan view of the light corridor shown in FIG. 4 illustrating the pattern flown by the aircraft when taking pictures.

## DETAILED DESCRIPTION

In a glide bomb system, a glide bomb has a television camera in the nose thereof that sends video images to an operator. The operator sends control signals to the glide bomb to guide it to a target. It is characteristic of the video images displayed to the operator to give an oblique view of terrain along a funnel-like flight path to the target. As the glide bomb is guided obliquely toward the target, the video images exhibit a successively increasing resolution. As the glide bomb gets closer to the target, the video images show the target with increasing fidelity. The camera can look around on either side of the flight path without the weapon following.

In accordance with the principles of the present invention, a simulation trainer is provided to train an operator in the steering of a glide bomb as a mission rehearsal. It is a feature of the present invention to provide a simulated mission in which the view angle is the same, and a real-time fly-through is provided over very realistic terrain for miles and miles along a funnel-like light path corridor. The trainer displays a very true representation of the target that successively exhibits increasing resolution as the simulated weapon funnels down to he target. The present invention is a novel method for generating an oblique photographic digital database providing the foregoing characteristics.

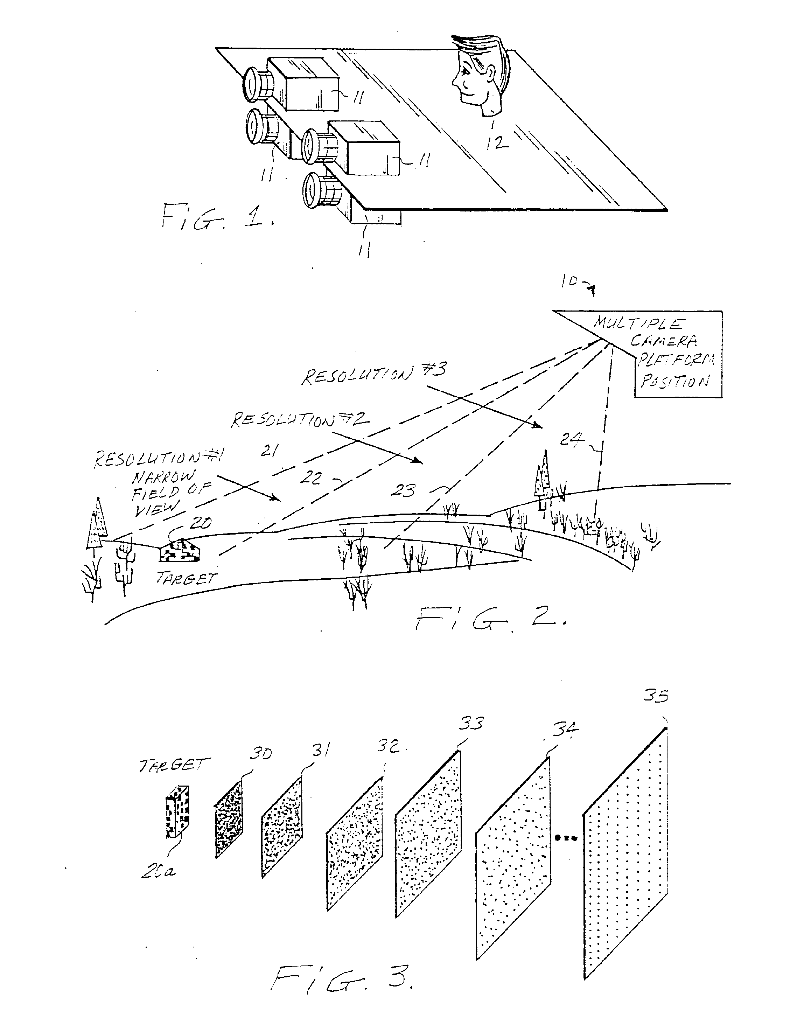

Referring now to FIG. 1, there is shown a perspective view of a camera platform 10 used for taking multiple photographs at a single eye point. The camera platform 10 is a stable mechanical future on which a plurality of cameras 11 are mounted. The camera platform 10 may be constructed of any suitable rigid material such as wood, aluminum, or the like. The camera platform 10 is provided with openings (not shown) as riquired to permit a photographer 12 to aim the plurality of cameras 11 simultaneously in the same direction. A remote controller (not shown) may also be disposed on he camera platform 10, if desired, to control the operation and synchronizatiomi of the plurality of cameras 11. The camera platform 10 enables a sole photographer 12 to simultaneously take photographs at a single eye point using multiple cameras 11. Each camera 11 has a different focal length and thus different magnification and the cameras 11 are synchronized. Although four cannneras 11 are shown in FIG. 1, three or six or some other suitable number of cameras 11 may be used, as desired. In one demonstration, six cameras 11 were employed. One camera 11 had a 40 mm wide angle lens, and at the other extreme another camera 11 had a 1,000 mm lens (500 mm with doubler). In between were cameras 11 with 80, 150, 250 and 500 mm lenses. The cameras 11 may be of any suitable make such as a Hasselblad or Sony, for example.

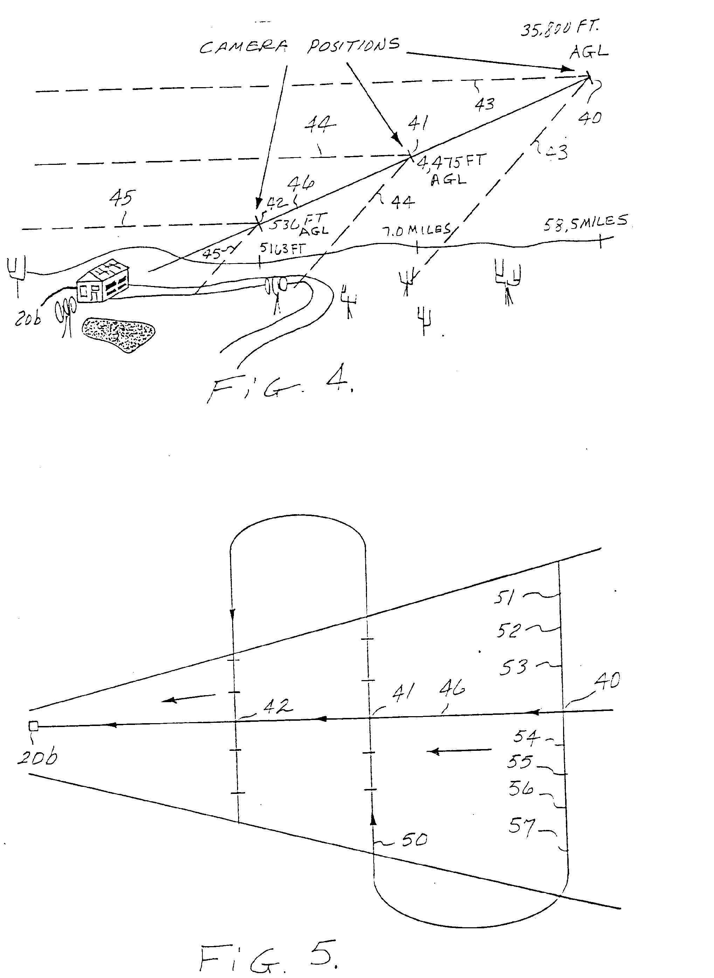

Referring now to FIG. 2 of the drawings, there is illustrated a perspective view of a corridor to a target 20. The camera platform 10 of FIG. 1 is on board an aircraft (not shown) at an eye point that is situated 40 miles (for example) from the target 20 and 35,000 feet (for example) above ground level. Oblique photographs are taken at an angle which approximates a flight path. These photographs are taken at a single eye point by multiple cameras 11 mounted on the camera platform 10 and aimed at the target 20. As discussed above, each of the cameras 11 has a different focal length, and the cameras 11 are synchronized.

As illustrated in FIG. 2, one of the cameras 11 is sharply focused on the target 20 as indicated by a region enclosed by first and second dashed lines 21, 22. This represents resolution #1 having a narrow field of view. At this focal length, the target 20 appears large in the photograph and the details of the target 20 are shown with great fidelity. Another of the cameras 11 has a wider angle of view and is not so sharply focused as indicated by a region enclosed by first and third dashed line 21, 23. At this focal length, the target 20 appears smaller and its details are less well defined, but the terrain along the corridor leading to the target 20 is clear and distinct. This represents resolution #2 having an intermediate field of view. A third one of the cameras 11 has a wide angle field of view as indicated by a region enclosed between first and fourth dashed lines 21, 24. This represents resolution #3 having a wide field of view. At this focal length, the target 20 appears tiny and blurred in the background. The intermediate region of resolution #2 appears distant with not very well defined details. The foreground, however, appears very clear and distinct with details represented in high fidelity.

After taking the photographs using multiple cameras 11 each having a different focal length, the film from each camera 11 is digitized. Techniques for digitizing the film are well known. For example, a digitizer camera such as that made by Eikonix, or the like, may be employed. Such digitizer cameras typically contain about 4000 sensors for converting picture values into electrical signals. Each photograph represents a resolution viewplane. The closest photograph (or highest magnification) is inset into the next closest photograph, and so on. Points are selected manually by an operator for registry between two adjacent photographs. This process involves a blending or merging of multiple digital photographs using techniques of shrinking, expanding and warping. For an explanation of such techniques, see the book Fundamentals of Interactive Computer Graphics, by J.D. Foley and A. Van Dam, Addison-Wesley, 1982. This data is then processed into multiple resolution viewplanes by various interpolation methods. For example, the digital data may be fed into existing Computer Generated Syntlnesized Imagery (CGSI) hardware for processing to render alternative eye point perspectives. These multiple resolution viewplanes represent a corridor based multiple resolution photographic database. When the images are displayed in sequence, they represent a single straight line approach to the target 20 because they are derived from oblique photographs taken at an angle which approximates a flight path. Since this technique uses actual photographic data, it displays a very true representation of the target 20.

FIG. 3 illustrates view planes produced by the digital process described hereinabove. The original three (or more) photographs are processed to derive on the order of 18 view planes. The process involves linear reduction or stirinking that is almost like averaging. The light values of adjacent pixels in both dimensions are averaged and the averaged pixels are replaced with a single pixel having the average value. FIG. 3 illustrates six viewplanes each having a different pixel resolution. At the left is a target 20a. A view plane 30 closest to the target 20a has a resolution of three inches per pixel. A second view plane 31 a little farther from the target 20a has a resolution of four inches per pixel. A third view plane 32 still farthier from the target 20 has a resolution of six inches per pixel. A fourth view plane 33 yet farther from the target 20a has a resolution of 1.4 feet per pixel. A fifth view plane 34 yet farther from the target 20a has a resolution of 3 feet per pixel. Thus, the resolution is a function of the range to the target 20a. The change in pixel resolution from one view plane to the next is on the order of 1.5 to 1. This continues out to the farthest view plane 35 which typically is view plane number 18. After the digital signals have been processed into multiple resolution view planes by any one of various well-known interpolation methods, the digital photographic database is complete and ready for use in a flight simulation trainer.

As will be seen from the foregoing, this method of generating an oblique photographic digital database comprises the following steps.

Step 1. Taking photographs at a single camera location using a plurality of cameras each with increasing magnification, at an angle approximating a flight path along a corridor to a target.

Step 2. Digitizing the photographs.

Step 3. Selecting manually registration points in two adjacent photographs.

Step 4. Warping the close in picture.

Step 5. Shrinking the close in picture.

Step 6. Feathering the edges of the close in picture.

Step 7. Insetting the close in picture into the farther out picture.

Step 8. Insetting the resulting picture into the next farther out picture, and so on, for each digitized photograph.

Step 9. Processing the inset digitized photographs to produce a plurality of multiple resolution view planes.

Referring now to FIG. 4, there is illustrated a second method of taking oblique photographs at an angle hat approximates a flight path to be used in generating an oblique photographic digital database. In this method a single camera is used to make photographs at first, second and third camera positions 40, 41, 42. In the example illustrated in FIG.4, the first camera position 40 is 58.5 miles from a target 20b, and 35,800 feet above ground level (AGL). The second camera position 41 is 7.0 miles from the target 20b and 4,475 feet AGL, and the third camera position 42 is 5, 163 feet from the target 20b and 536 feet AGL. The view angle is maintained the same at each of he camera positions 40, 41, 42 as indicated by first, second and third pairs of dashed lines 43, 44, 45. The photographs are taken from an aircraft (not shown), and at first glance it would appear that the photographs should be taken from the forward end or the aft end of the aircraft as it travels along a path 46 toward or away from the target 20b. However, it has not been found practical to take the photographs while traveling toward or away from the target 20b.

FIG. 5 is a plan view of the scene depicted in FIG. 4, and shows the flight pattern 50 employed by the aircraft for taking photographs at the first, second and third camera positions 40, 41, 42 along a funnel-shaped corridor to the target 20b. As may be seen in FIG. 5, the aircraft (not shown) lies a sinuous pattern 50 that passes through the three camera positions 40, 41, 42. While passing through the camera positions 40, 41, 42, the aircraft flies a straight line orthogonal to the path 46 to the target 20b, and snaps pictures at a plurality of points 51 - 57 on either side of the first camera position 40 as well as at the first camera position 40. Then the aircraft changes altitude and flies transverse to the path 46 through the second camera position 41 and snaps pictures at and on either side of the second camera position 41. Similarly, the aircraft changes altitude again and snaps a series of photographs at and on each side of the third camera position 42. After the photographs have been made they are compared and one appropriate photograph is selected for each camera position 40, 41, 42. The film is digitized and then digitally warped to align the eye point along a single straight line approach to the target. The multiple digital images are merged together by digitally blending the highest resolution digitized image into the next highest resolution digitized image, and then blending the blended image into the next highest resolution image, and so on, for each respective digitized image. Finally the digitized images are processed into a plurality of multiple resolution viewplanes by interpolation techniques, each respective viewplane having correspondingly increasing resolution that is a function of range to the target.

Accordingly, the second method of generating an oblique digital database comprises the following steps.

Step 1. Taking a series of photographs at a plurality of camera locations using a single camera with the same lens, at an angle approximating a flight path along a corridor to a target.

Step 2. Digitizing the photographs.

Step 3. Selecting manually registration points in two adjacent photographs.

Step 4. Warping the close in picture. Step 5. Shrinking the close in picture.

Step 6. Feathering the edges of the close in picture.

Step 7. Insetting the close in picture into the farther out picture.

Step 8. Insetting the resulting picture into the next farther out picture, and so on, for each digitized photograph.

Step 9. Processing the inset digitized photographs to produce a plurality of multiple resolution view planes.

The methods of the present invention generate a corridor based multiple resolution photographic database wherein the amount of digital computer processing time is reduced by a factor of greater than one hundred as compared to conventional downlooking imagery conversion techniques that render oblique views. The methods of the present invention reduce the amount of digital image storage and provide a more realistic perspective view than rendering downlooking imagery to oblique views.

Thus there has been described new and improved methods for generating a corridor based multiple resolution photographic database. It is to be understood that the above-described methods are merely illustrative of some of the many specific methods which represent applications of the principles of the present invention. Clearly, numerous and other methods can be readily devised by those skilled in the art without departing from the scope of the invention.

## Claims

1. A method of generating a corridor based multiple resolution photographic database of an image scene having a target located therein, said method comprising the steps of:

   photographing the image scene at an oblique angle relative to the target that corresponds to a desired flight path thereto to generate multiple photographic images;

   digitizing the multiple photographic images to form multiple digitized images;

   merging the multiple digitized images together by digitally blending the highest resolution digitized image into the next highest resolution digitized image, and then blending the blended image into the next highest resolution image, and so on, for each respective digitized image; and

   processing the digitized images into a plurality of viewplanes, each respective viewplane having correspondingly increasing resolution that is a function of range to the target.

2. The method of Claim 1 wherein the step of photographing the image scene comprises the steps of:

   providing a plurality of cameras, each camera having a different focal length;

   collocating the plurality of cameras on a platform that is aimable at an area of interest that includes the target;

   synchronizing the plurality of cameras; and

   photographing the image scene from the platform.

3. The method of Claim 1 wherein the step of photographing the image scene comprises the steps of:

   providing a camera; and

   photographing the image scene from different locations along a predetermined line of flight towards the target.

4. The method of Claim 3 further comprising the step of:

   digitally warping the digitized images to align the viewpoint along a single straight line approach to the target.

5. A method of generating a corridor based multiple resolution photographic database of an image scene having a target located therein, said method comprising the steps of:

   photographing an image scene having a target located therein using a plurality of substantially collocated, synchronized cameras, each camera having a different focal length, to generate multiple photographic images;

   digitizing the multiple photographic images generated by each of the plurality of cameras to generate multiple digitized images;

   merging the multiple digitized images together by digitally blending the highest resolution digitized image into the next highest resolution digitized image, and then blending the blended image into the next highest resolution image, and so on, for each respective digitized image;

   processing the digitized images into a plurality of viewplanes, each respective viewplane having correspondingly increasing resolution that is a function of range to the target.

6. A method of generating a corridor based multiple resolution photographic database of an image scene having a target located therein, said method comprising the steps of:

   photographing an image scene having a target located therein using a single camera from different locations along a predetermined line of flight towards the target to generate multiple photographic images;

   digitizing the multiple photographic images generated by the camera to generate multiple digitized images;

   merging the multiple digitized images together by digitally blending the highest resolution digitized image into the next highest resolution digitized image, and then blending the blended image into the next highest resolution image, and so on, for each respective digitized image;

   processing the digitized images into a plurality of viewplanes, each respective viewplane having correspondingly increasing resolution that is a function of range to the target.

7. The method of Claim 6 further comprising the step of:

   digitally warping the digitized images to align the viewpoint along a single straight line approach to the target.

8. A method of generating a corridor based multiple resolution photographic database of an image scene having a target located therein, said method comprising the steps of:

   providing a plurality of cameras, each camera having a different focal length;

   collocating the plurality of cameras on a platform that is aimable at an area of interest that includes the target;

   synchronizing the plurality of cameras;

photographing the image scene from the platform to generate multiple photographic images;

digitizing the multiple photographic images generated by each of the plurality of cameras to generate multiple digitized images;

merging the multiple digitized images together by digitally blending the highest resolution digitized image into the next highest resolution digitized image, and then blending the blended image into the next highest resolution image, and so on, for each respective digitized image;

processing the digitized images into a plurality of viewplanes, each respective viewplane having correspondingly increasing resolution that is a function of range to the target.

9. A method of generating a corridor based multiple resolution photographic database of an image scene having a target located therein, said method comprising the steps of:

providing a camera;

photographing the image scene from different locations along a predetermined line of flight towards the target to generate multiple photographic images;

digitizing images generated by the camera to generate multiple digitized images;

digitally warping the digitized images to align the viewpoint along a single straight line approach to the target;

merging the multiple digitized images together by digitally blending the highest resolution digitized image into the next highest resolution digitized image, and then blending the blended image into the next highest resolution image, and so on, for each respective digitized image;

processing the digitized images into a plurality of viewplanes, each respective viewplane having correspondingly increasing resolution that is a function of range to the target.

FIG. 1.

FIG. 2.

FIG. 3.

CAMERA POSITIONS

35,800 FT. AGL

44  41  43  40

46  ±3

45  42  44

536 FT AGL  4,475 FT AGL

5103 FT  7.0 MILES  53,5 MILES

45

20b

FIG. 4.

51
52
53
40

42  41  46

54
55
56
57

20b

50

FIG. 5.